# EUROPEAN PATENT APPLICATION

(11) **EP 4 242 885 A1**
(43) Date of publication of application: **13.09.2023**
(21) Application number: 21896892.3
(22) Date of filing: 19.11.2021
(51) Int. Cl.: G06F 21/12

(54) **METHOD FOR MANAGING COMMUNICATION OF UNTRUSTED APPLICATION PROGRAM, AND RELATED APPARATUS**

(30) Priority: 27.11.2020 CN 202011365125
(71) Applicant: Huawei Technologies Co., Ltd., Shenzhen, Guangdong 518129 (CN)
(72) Inventor: ZHOU, Yiyang, Shenzhen, Guangdong 518129 (CN); QUAN, Zhengjie, Shenzhen, Guangdong 518129 (CN); WANG, Yang, Shenzhen, Guangdong 518129 (CN)
(74) Representative: Körber, Martin Hans
(86) International application number: PCT/CN2021/131767
(87) International publication number: WO 2022/111391

(57) **Abstract**

A method for managing communication of an untrusted application, and a related apparatus are disclosed. The method includes: A host process obtains an access request of the untrusted application for a first program, and replaces a communication handle carried in the access request with a communication handle of a first management application. Therefore, the first program can communicate with the untrusted application only based on the communication handle of the first management application, but cannot directly communicate with the untrusted application based on the communication handle of the untrusted application. This avoids a case in which the host process cannot play a management role due to direct communication, and reduces risks such as privacy data leakage and abnormal running of an operating system caused by running of the untrusted application.

## Description

This application claims priority to Chinese Patent Application No. 202011365125.6, filed with the China National Intellectual Property Administration on November 27, 2020 and entitled "METHOD FOR MANAGING COMMUNICATION OF UNTRUSTED APPLICATION, AND RELATED APPARATUS", which is incorporated herein by reference in its entirety.

### TECHNICAL FIELD

Embodiments of this application relate to the field of computer technologies, and in particular, to a method for managing communication of an untrusted application, and a related apparatus.

### BACKGROUND

An Android (Android) operating system is one of most popular mobile operating systems, and numerous developers develop applications based on the Android operating system. The Android operating system complies with an open-source protocol, and allows a third-party vendor to develop a customized operating system based on source code. This reduces security of the Android operating system to some extent. In addition, the Android operating system allows a user to install an application through a third-party channel, which provides convenience for the user to use the application, but increases risks such as privacy data leakage and abnormal running of the operating system for an untested or untrusted application.

Therefore, communication behavior of the untested or untrusted application needs to be managed, to reduce the risks such as privacy data leakage and abnormal running of the operating system.

### SUMMARY

Embodiments of this application provide a method for managing communication of an untrusted application, and a related apparatus, to reduce risks such as privacy data leakage and abnormal running of an operating system when the untrusted application runs.

A first aspect of embodiments of this application provides a method for managing communication of an untrusted application, including: A first process obtains a first request of a second process for a first program, where the first program may be an Android system program, or may be a third-party application. The first request may be an access request for the third-party application, or may be a request for establishing a communication connection to the first program, and carries at least one request parameter. A first management application runs in the first process, and the untrusted application runs in the second process. The first process replaces a first communication handle in the at least one request parameter with a communication handle of the first management application based on the first communication handle included in the at least one request parameter. Then, the first process sends a second request for the first program to a target process. The second request carries the at least one request parameter including the communication handle of the first management application, and the first program runs in the target process.

The first process obtains the first request, replaces, with the communication handle of the first management application in the first process, a communication handle that is of the untrusted application and that is included in the request parameter carried in the first request, and then sends, to the target process, the second request that carries the communication handle of the first management application. In this way, a communication handle obtained by the target process is the communication handle of the first management application rather than the communication handle of the untrusted application. Therefore, the target process can communicate with the first process only based on the communication handle of the first management application, but cannot communicate with the second process based on the communication handle of the untrusted application. This avoids a case in which the first process cannot play a management role because the target process directly communicates with the second process, and further reduces risks such as privacy data leakage and abnormal running of the operating system caused by running of the untrusted application.

In an implementation, the first request is included in a communication package, and the communication package may be considered as a serialization manner. After a first process obtains a first request of a second process for a first program and before the first process replaces a first communication handle in the at least one request parameter with a communication handle of the first management application based on the first communication handle included in the at least one request parameter, the method further includes: The first process determines storage location information of the first communication handle in the communication package based on a storage flag bit. The storage flag bit is used to mark a start location of a target storage area in the communication package, and the target storage area is used to store the first communication handle. The first process obtains the first communication handle based on the storage location information.

In this implementation, a feasible solution of obtaining the first communication handle by parsing the communication package is provided, and is applicable to a scenario in which the first request is included in the communication package.

In an implementation, the first program is a third-party application, the first request is used to request a communication handle of the first program, the second request is used to request the communication handle of the first program, and the first communication handle is a communication handle of the untrusted application. Before the first process obtains a first request of a second process for a first program, the method further includes: The first process replaces, with the communication handle of the first management application, a communication handle that is of an application management service and that is in an address space corresponding to the second process, so that the second process sends the first request to the first process based on the communication handle of the first management application. In the Android system, the application management service is used for inter-process management. When the second process needs to send the first request to the target process, the second process needs to first send the first request to the application management service, and then the application management service forwards the first request to the target process of the first program.

Because the first process replaces, with the communication handle of the first management application, the communication handle that is of the application management service and that is in the address space corresponding to the second process, the second process uses the communication handle of the first management application as the communication handle of the application management service. In this way, when the second process sends the first request to the target process of the first program, the second process sends the first request to the first process based on the communication handle of the first management application. After receiving the first request, the first process sends, to the target process, the second request for establishing a communication connection, to establish the communication connection between the first process and the target process, so that the first process manages a process of establishing the communication connection between the second process and the target process. In addition, after the communication connection is established, a message transferred between the second process and the target process needs to be forwarded by using the first process, so that the first process manages communication of the second process, and risks such as privacy data leakage and abnormal running of an operating system are reduced.

In an implementation, after a first process obtains a first request of a second process for a first program, the method further includes: The first process associates the communication handle of the untrusted application with the communication handle of the first management application.

Because the communication handle of the untrusted application is associated with the communication handle of the first management application, after the target process sends a message to the first process based on the communication handle of the first management application, the first process can determine the communication handle of the untrusted application based on the communication handle of the first management application, and then send the message to the second process based on the communication handle of the untrusted application, to implement message forwarding, and avoid a message sending error caused when the first process sends the message based on a communication handle of a program other than the untrusted application.

In an implementation, the first program is a third-party application, the first request is used to access the first program, and the second request is used to access the first program. The communication handle that is of the first program and that is stored in an address space of the second process is the communication handle of the first management application. That a first process obtains a first request of a second process for a first program includes: The first process receives the first request of the second process for the first program based on the communication handle of the first management application.

Because the communication handle that is of the first program and that is stored in the address space of the second process is the communication handle of the first management application, the second process sends, based on the communication handle of the first management application, a request for accessing the first program. After receiving the first request, the first process acts as a proxy of the second process to access the first program in the target process, so that the first process manages a process in which the untrusted application accesses the third-party application.

In an implementation, an address space of the first process stores the communication handle of the first program, and the communication handle of the first program is associated with the communication handle of the first management application. That the first process sends a second request for the first program to a target process includes: The first process sends the second request to the target process based on the communication handle that is of the first program and that is associated with the communication handle of the first management application.

Based on an association relationship between the communication handle of the first program and the communication handle of the first management application, a host may determine the communication handle that is of the first program and that is associated with the communication handle of the first management application, and after the second process sends a request to the first process based on the communication handle of the first management application, the second request is sent based on the communication handle that is of the first program and that is associated with the communication handle of the first management application. This avoids a sending error of the second request caused when the first process sends the second request based on a communication handle of a program other than the first program.

In an implementation, the first program is a system program, and the system program is an Android system program and may specifically include a system program such as a clipboard program or a mobile hotspot Wi-Fi. The first request is used to access the first program, and the second request is used to access the first program. Before a first process obtains a first request of a second process for a first program, the method further includes: The first process adds, to a service manager in an address space corresponding to the second process, an identifier of the first program and the communication handle that is of the first management application and that is used to replace a communication handle of the first program, so that the second process sends the first request to the first process based on the communication handle of the first management application. The at least one request parameter further includes the identifier of the first program.

Because the first process adds, to the service manager in the address space corresponding to the second process, the identifier of the first program and the communication handle that is of the first management application and that is used to replace the communication handle of the first program, the second process sends, to the first process based on the communication handle of the first management application, the first request for accessing the first program. In this way, the first process can act as a proxy of the second process to access the first program in the target process, and the first process can manage accessing of the untrusted application to the system program.

In an implementation, after a first process obtains a first request of a second process for a first program, and before the first process sends a second request for the first program to a target process, the method further includes: The first process queries, from a service manager in an address space corresponding to the first process, the communication handle that is of the first program and that corresponds to the identifier of the first program. That the first process sends a second request to a target process includes: The first process sends the second request to the target process based on the communication handle of the first program.

This implementation provides a specific solution in which the first process sends the second request.

In an implementation, after the first process sends a second request to a target process, the method further includes: The first process receives a first response of the target process to the second request. The first response carries at least one response parameter. The first process replaces a second communication handle in the at least one response parameter with the communication handle of the first management application based on the second communication handle included in the at least one response parameter. The first process sends a second response to the first request to the second process. The second response carries the at least one response parameter including the communication handle of the first management application.

The first process obtains the second response from the target process, replaces, with the communication handle of the first management application, the second communication handle in the response parameter carried in the second response, and then sends, to the second process, the communication handle that carries the first management application. In this way, the second process can receive only the communication handle of the first management application, but does not receive the second communication handle different from the communication handle of the first management application. This avoids a case in which the first process cannot play a management role because the second process directly communicates with a process other than the first process based on the second communication handle, and further reduces risks such as privacy data leakage and abnormal running of an operating system caused by running of the untrusted application.

In an implementation, the first program is the third-party application, the first request is used to request the communication handle of the first program, the second request is used to request the communication handle of the first program, and the second communication handle is the communication handle of the first program. After the first process receives a first response of the target process to the second request, the method further includes: The first process associates the communication handle of the first program with the communication handle of the first management application.

Because the communication handle of the first program is associated with the communication handle of the first management application, after the second process sends the message to the first process based on the communication handle of the first management application, the first process can determine the communication handle of the first program based on the communication handle of the first management application, and then send the message to the second process based on the communication handle of the first program, to implement message forwarding, and avoid a message sending error caused when the first process sends the message based on a communication handle of a program other than the first program.

In an implementation, the method further includes: The first process receives a third request of the second process based on the communication handle of the first management application. The third request carries an identifier of the second program and an identifier of an application programming interface API of the second program. The first process accesses the API of the second program based on the identifier of the second program and the identifier of the API of the second program that are in the third request. The second program is mainly a system program that cannot be directly accessed according to a binder mechanism because a communication handle is not stored in the service manager. For example, the second program may be an alarm clock service AlarmManager or an audio manager AudioManager.

In this implementation, the first process receives the third request for accessing the API of the second program. This is applicable to a scenario in which the second program cannot be directly accessed according to the binder mechanism because the communication handle of the second program is not stored in the service manager

In an implementation, the method further includes: The first process sends an access result of the API of the second program to the second process based on the communication handle of the untrusted application.

In this implementation, the first process acts a proxy of the second process to access the API of the second program, to manage a process in which the untrusted application accesses the API of the second program.

A second aspect of embodiments of this application provides a method for managing communication of an untrusted application, including: A second process queries a communication handle of a first program from a service manager in an address space corresponding to the second process, to obtain a communication handle of a first management application and an identifier of the first program. The first program is a system program. The second process sends a first request to a first process based on the communication handle of the first management application. The first request is used to access the first program, and at least one request parameter includes the identifier of the first program.

Because the second process queries the communication handle of the first management application instead of the communication handle of the first program, when the second process accesses the first program, the second process sends the first request to the first process based on the communication handle of the first management application. In this way, the first process manages a system program whose communication handle is stored in the service manager and that is accessed by the untrusted application.

In an implementation, the method further includes: The second process loads a custom class to an address space of the second process by using a custom class loader. An identifier of the custom class is the same as an identifier of a second program, an identifier of an application programming interface API of the custom class is the same as an identifier of an API of the second program, the API of the custom class is used to enable the second process to send a third request to the first process based on the communication handle of the first management application, and the third request carries the identifier of the second program and the identifier of the API of the second program. When the second process accesses the API of the second program based on the identifier of the second program and the identifier of the API of the second program, the second process accesses the API of the custom class. The second process sends the third request to the first process based on the communication handle of the first management application.

Because the identifier of the custom class is the same as the identifier of the second program, when the second process accesses the second program, the second process accesses the custom class. In addition, because the identifier of the API of the custom class is the same as the identifier of the API of the second program, when the second process accesses the API of the second program, the second process accesses the API of the custom class. When the second process accesses the API of the custom class, the second process sends the third request to the first process based on the communication handle of the first management application, so that the first process manages a process in which the untrusted application accesses the API of the second program.

A third aspect of embodiments of this application provides an apparatus for managing communication of an untrusted application, including:
a transceiver unit, configured to obtain a first request of a second process for a first program, where the first request carries at least one request parameter, a first management application runs in a first process, and the untrusted application runs in the second process; and
a processing unit, configured to replace a first communication handle in the at least one request parameter with a communication handle of the first management application based on a first communication handle proxy included in the at least one request parameter.

The transceiver unit is configured to send a second request to a target process. The second request carries the at least one request parameter including the communication handle of the first management application, and the first program runs in the target process.

In an implementation, the first request is included in a communication package. The processing unit is further configured to: determine storage location information of the first communication handle in the communication package based on a storage flag bit, where the storage flag bit is used to mark a start location of a target storage area in the communication package, and the target storage area is used to store the first communication handle; and obtain the first communication handle based on the storage location information.

In an implementation, the first program is a third-party application, the first request is used to request a communication handle of the first program, the second request is used to request the communication handle of the first program, and the first communication handle is a communication handle of the untrusted application.

Correspondingly, the processing unit is further configured to replace, with the communication handle of the first management application, a communication handle that is of an application management service and that is in an address space corresponding to the second process, so that the second process sends the first request to the first process based on the communication handle of the first management application.

In an implementation, the processing unit is further configured to associate the communication handle of the untrusted application with the communication handle of the first management application.

In an implementation, the first program is a third-party application, the first request is used to access the first program, and the second request is used to access the first program. The communication handle that is of the first program and that is stored in an address space of the second process is the communication handle of the first management application.

Correspondingly, the transceiver unit is further configured to receive the first request of the second process for the first program based on the communication handle of the first management application.

In an implementation, an address space of the first process stores the communication handle of the first program, and the communication handle of the first program is associated with the communication handle of the first management application.

Correspondingly, the transceiver unit is further configured to send the second request to the target process based on the communication handle that is of the first program and that is associated with the communication handle of the first management application.

In an implementation, the first program is a system program, the first request is used to access the first program, and the second request is used to access the first program.

The processing unit is further configured to add, to a service manager in an address space corresponding to the second process, an identifier of the first program and the communication handle that is of the first management application and that is used to replace a communication handle of the first program, so that the second process sends the first request to the first process based on the communication handle of the first management application. The at least one request parameter further includes the identifier of the first program.

In an implementation, the processing unit is further configured to query, from a service manager in an address space corresponding to the first process, the communication handle that is of the first program and that corresponds to the identifier of the first program.

The transceiver unit is further configured to send the second request to the target process based on the communication handle of the first program.

In an implementation, the transceiver unit is further configured to receive a first response of the target process to the second request. The first response carries at least one response parameter.

The processing unit is further configured to replace a second communication handle in the at least one response parameter with the communication handle of the first management application based on the second communication handle included in the at least one response parameter.

The transceiver unit is further configured to send a second response to the first request to the second process. The second response carries the at least one response parameter including the communication handle of the first management application.

In an implementation, the first program is the third-party application, the first request is used to request the communication handle of the first program, the second request is used to request the communication handle of the first program, and the second communication handle is the communication handle of the first program.

Correspondingly, the processing unit is further configured to associate, by using the first process, the communication handle of the first program with the communication handle of the first management application.

In an implementation, the transceiver unit is further configured to: receive, by using the first process, a third request of the second process based on the communication handle of the first management application, where the third request carries an identifier of the second program and an identifier of an application programming interface API of the second program; and access the API of the second program based on the identifier of the second program and the identifier of the API of the second program that are in the third request.

In an implementation, the transceiver unit is further configured to send an access result of the API of the second program to the second process based on the communication handle of the untrusted application.

For specific implementations, related descriptions, and technical effect of the foregoing units, refer to descriptions in the first aspect of embodiments of this application.

A fourth aspect of embodiments of this application further provides an apparatus for managing communication of an untrusted application, including:
a processing unit, configured to query a communication handle of a first program from a service manager in an address space corresponding to a second process, to obtain a communication handle of a first management application and an identifier of the first program, where the first program is a system program; and
a transceiver unit, configured to send a first request to a first process based on the communication handle of the first management application, where at least one request parameter includes the identifier of the first program.

In an implementation, the processing unit is further configured to load a custom class to an address space of the second process by using a custom class loader, where an identifier of the custom class is the same as an identifier of a second program, an identifier of an application programming interface API of the custom class is the same as an identifier of an API of the second program, the API of the custom class is used to enable the second process to send a third request to the first process based on the communication handle of the first management application, and the third request carries the identifier of the second program and the identifier of the API of the second program. When the second process accesses the API of the second program based on the identifier of the second program and the identifier of the API of the second program, the second process accesses the API of the custom class.

The transceiver unit is further configured to send, by using the second process, the third request to the first process based on the communication handle of the first management application.

For specific implementations, related descriptions, and technical effect of the foregoing units, refer to descriptions in the second aspect of embodiments of this application.

A fifth aspect of embodiments of this application provides a terminal device, including one or more processors and a memory. The memory stores computer-readable instructions. The one or more processors read the computer-readable instructions, to enable a computer device to implement the method according to any one of the implementations of the first aspect.

A sixth aspect of embodiments of this application provides a terminal device, including one or more processors and a memory. The memory stores computer-readable instructions. The one or more processors read the computer-readable instructions, to enable a computer device to implement the method according to any one of the implementations of the second aspect.

A seventh aspect of embodiments of this application provides a computer-readable storage medium, including computer-readable instructions. When the computer-readable instructions are run on a computer, the computer is enabled to perform the method according to any one of the implementations of the first aspect or the second aspect.

An eighth aspect of embodiments of this application provides a chip, including one or more processors. Some or all of the processors are configured to read and execute a computer program stored in a memory, to perform the method according to any one of the possible implementations of the first aspect or the second aspect.

Optionally, the chip includes the memory, and the memory and the processor are connected to the memory through a circuit or a wire. Further, optionally, the chip further includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface.

In some implementations, some of the one or more processors may implement some steps in the foregoing method by using dedicated hardware. For example, processing related to a neural network model may be implemented by a dedicated neural network processor or graphics processing unit.

The method provided in embodiments of this application may be implemented by one chip, or may be cooperatively implemented by a plurality of chips.

A ninth aspect of embodiments of this application provides a computer program product. The computer program product includes computer software instructions, and the computer software instructions may be loaded by a processor to implement the method according to any one of the implementations of the first aspect.

It can be learned from the foregoing technical solutions that embodiments of this application have the following advantages:
A first process obtains a first request, replaces, with a communication handle of a first management application in the first process, a communication handle that is of an untrusted application and that is included in a request parameter carried in the first request, and then sends, to a target process, a second request that carries the communication handle of the first management application. In this way, a communication handle obtained by the target process is the communication handle of the first management application rather than the communication handle of the untrusted application. Therefore, the target process can communicate with the first process only based on the communication handle of the first management application, but cannot communicate with the second process based on the communication handle of the untrusted application. This avoids a case in which the first process cannot play a management role because the target process directly communicates with the second process, and further reduces risks such as privacy data leakage and abnormal running of an operating system caused by running of the untrusted application.

### BRIEF DESCRIPTION OF DRAWINGS

FIG. 1 is a schematic diagram of a system architecture according to an embodiment of this application;
FIG. 2 is a schematic diagram of a binder mechanism;
FIG. 3 is a schematic diagram of a framework corresponding to a method according to an embodiment of this application;
FIG. 4 is a schematic diagram of an embodiment of a method for managing communication of an untrusted application according to an embodiment of this application;
FIG. 5 is a schematic diagram of another embodiment of a method for managing communication of an untrusted application according to an embodiment of this application;
FIG. 6 is a schematic diagram of a first application example according to an embodiment of this application;
FIG. 7 is a schematic diagram of a second application example according to an embodiment of this application;
FIG. 8 is a schematic diagram of an embodiment of an apparatus for managing communication of an untrusted application according to an embodiment of this application;
FIG. 9 is a schematic diagram of another embodiment of an apparatus for managing communication of an untrusted application according to an embodiment of this application; and
FIG. 10 is a schematic diagram of an embodiment of a terminal device according to an embodiment of this application.

### DESCRIPTION OF EMBODIMENTS

The following describes embodiments of this application with reference to the accompanying drawings. It is clear that the described embodiments are merely some rather than all of the embodiments of this application. A person of ordinary skill in the art may learn that, with development of technologies and emergence of a new scenario, the technical solutions provided in embodiments of this application are also applicable to a similar technical problem.

In this specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments described herein can be implemented in other orders than the order illustrated or described herein. Moreover, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Names or numbers of steps in this application do not mean that the steps in the method procedure need to be performed in a time or logical sequence indicated by the names or numbers. An execution sequence of the steps in the procedure that have been named or numbered can be changed based on a technical objective to be achieved, provided that same or similar technical effect can be achieved.

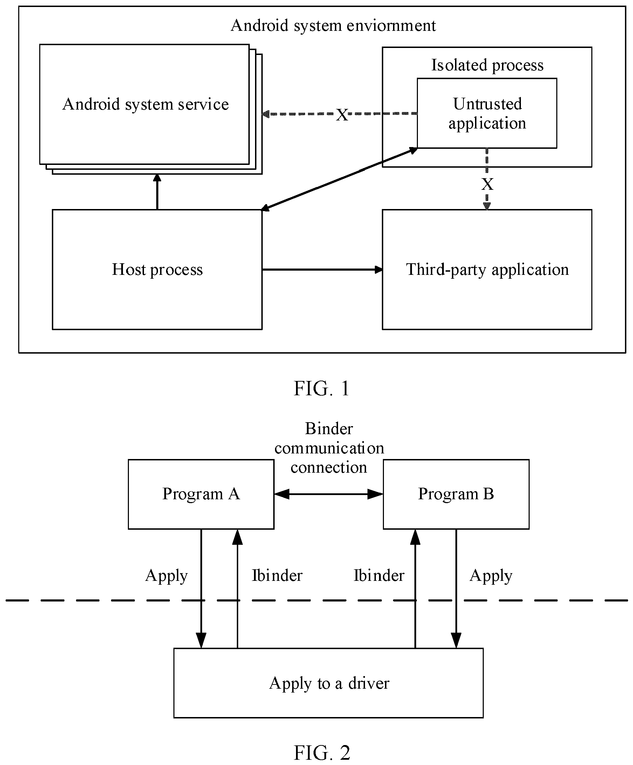

Embodiments of this application may be applied to a system architecture shown in FIG. 1. As shown in FIG. 1, the system is located in an Android (Android) environment, and specifically includes an isolated process, a host process, a third-party application, and an Android system program.

A process is a running entity of a program. A program is a description of an instruction, data, and an organization form thereof, and the process is the running entity of the program. There may be a plurality of concurrent threads in one process, and all the threads execute different tasks in oarallel. The thread may be an actual ooeratine unit of the process. However, in embodiments of this application, the thread is not clearly distinguished from the process and is replaced with the process during description.

The isolated process (Isolated Process) is a special process with "no permission" in the Android system. An application running in the isolated process cannot directly communicate with an external environment (including the Android system program and the third-party application shown in FIG. 1), and can communicate with the external environment only by using the host process. This provides a sandbox environment for the application. A sandbox (Sandbox), also referred to as a sandbox, is a security mechanism that provides an isolated environment for a running application.

The host process (Host Process) is a common process in the Android system, and is used to establish a connection to the isolated process, and manage and act as a proxy for communication behavior between the isolated process and the external environment.

The Android system program is a system that controls and coordinates an Android device and an external device, and supports development and running of application software, and the Android system program is a set of various programs that require no user intervention.

The third-party application corresponds to system software, is program design languages that a user may use and a set of programs compiled by the program design languages. The third-party application is divided into an application software package and a user program.

To reduce a risk caused by running of an untested or untrusted application (referred to as an untrusted application below), the untrusted application may run in the isolated process shown in FIG. 1, and a first management application may run in the host process shown in FIG. 1. The host process establishes a connection to the isolated process. Then, the host process receives all external access requests of the isolated process, and performs security verification on the access request.

For an access request whose security verification result meets a requirement, the host process acts, based on the access request, as a proxy of the untrusted application in the isolated process to complete access, and sends the access result back to the untrusted application in the isolated process. For an access request whose security verification result does not meet a requirement, the host process terminates the access request. In this way, the host process can manage and act as a proxy for communication between the isolated process and the external environment.

It should be understood that both the Android system program and the third-party application run in corresponding processes. Therefore, a communication process between the untrusted application and the external environment is inter-process communication (Inter-Process Communication, IPC).

IPC may be implemented in a plurality of manners. For example, two processes may communicate with each other based on a communication handle, and the communication handle may also be referred to as a cross-process communication handle.

In the Android system, the communication handle may be an Ibinder. When the communication handle is the Ibinder, two processes communicate with each other according to a binder mechanism. The following describes the binder mechanism by using a program A and a program B as an example. The program A may be an Android system program, or may be a third-party application. Similarly, the program B may be an Android system program, or may be a third-party application.

As shown in FIG. 2, the program A may apply to a binder driver for creating a binder in a process of the program A, and the binder may also be referred to as a binder entity or a local object. Similarly, the program B may apply to a binder driver for creating a binder in a process of the program B, and the binder may also be referred to as a binder entity or a local object.

If the program A and the program B need to communicate with each other according to a binder mechanism, the program A and the program B first need to establish a binder connection. Establishing the binder connection may be understood as that: The program A obtains an Ibinder of the program B, and the program B obtains an Ibinder of the program A. The Ibinder may also be referred to as an Ibinder reference, a remote object, or a binder proxy (proxy). For ease of description, the binder proxy is used below to replace the Ibinder.

The Ibinder defines a basic interface for a remote callable object. The basic interface describes an abstract protocol for interacting with the remote callable object. The binder is a base class of the remote callable object, is an implementation class of the Ibinder, and provides standard local implementation of objects such as the Ibinder.

When the program A initiates an access to the program B, the program A may initiate an access to the program B by using a binder proxy of the program B. An access process may be understood as that: The program A sends an access request to the binder driver by using the binder proxy of the program B, and the binder driver processes the access request, and allocates two buffers (Buffer). One buffer is used to write a parameter in the access request, and the program B may read the parameter in the access request from the buffer. The other buffer is configured to write a parameter in an access response from the program B, and the program A may read the parameter in the access response from the buffer.

Similarly, when the program B initiates an access to the program A, the program B may initiate the access to the program Aby using a binder proxy of the program A. An access process may be understood with reference to the foregoing process in which the program A accesses the program B.

It can be learned from the foregoing description that any two programs that can communicate with each other according to the binder mechanism can directly communicate with each other by using the binder proxy after obtaining the binder proxies of the two programs.

In this case, for the untrusted application, if the untrusted application obtains a binder proxy of a program other than the first management application in the host process, the untrusted application may directly communicate with the program other than the first management application by using the binder proxy. This means: The host process cannot manage communication behavior of the isolated process; consequently, a risk caused by running of the untrusted application is increased.

In view of this, an embodiment of this application provides a method. In the method, a host process obtains a request of an isolated process in a process of acting as a proxy of the isolated process for an access, and replaces a binder proxy in the request. In the method, the host process further obtains a response sent to the isolated process, and replaces the binder proxy in the request, to prevent the isolated process from obtaining a binder proxy of another application, so as to reduce a risk caused by running of an untrusted application.

Before the method provided in embodiments of this application is described, other terms in embodiments of this application are first described.

A parcel is a message container. A message (including data and an object reference) packaged by the message container can be transmitted according to an Ibinder mechanism.

A hook (Hook) technology is a series of computer programming technologies that change or enhance behavior of an operating system, an application, or another software component by intercepting a function call, a message, or an event transmitted between software components.

A service manager (ServiceManager) is an important class in an Android system, and is used to manage all Android system programs and maintain binder communication between the Android system programs and a third-party application.

An application management service (ActivityManagerService) may also be referred to as a job management application, is a core service of Android system components, and is responsible for startup, switching, scheduling, and process management and scheduling of four components (Activity, Service, BroadcastReceiver and ContentProvider) in a system.

PackageManagerService is a core service of Android system components, and is responsible for all package-related work, such as application installation and uninstallation.

The following describes the method provided in embodiments of this application.

For ease of understanding, the following uses an Android system as an example to describe the methods provided in embodiments of this application, and uses a binder mechanism as an inter-process communication mode. Correspondingly, a binder proxy is used to replace a communication handle.

It should be noted that a system to which the method provided in embodiments of this application is applied is not limited to the Android system.

In addition, the method provided in embodiments of this application is applied to a target process, a first process, and a second process, where the first process is a process for managing communication of an untrusted application, the second process is a process for running the untrusted application, and the target process is a process for running a first program. For ease of description, the following uses the host process to replace the first process, and uses the isolated process to replace the second process.

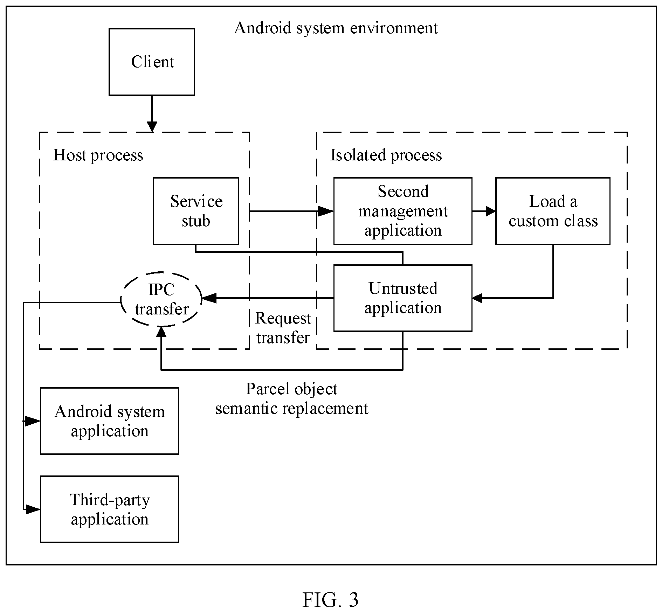

FIG. 3 is a schematic diagram of a framework corresponding to a method according to an embodiment of this application.

As shown in FIG. 3, in an Android system environment, a client accesses an untrusted application, and the client may be a client corresponding to any third-party application.

A process in which the client accesses the untrusted application may include a loading process of the untrusted application, a life cycle management process of the untrusted application, and a running process of the untrusted application.

The loading process of the untrusted application is as follows:
First, the client starts a host process, where a first management application runs in the host process. Then, the host process starts an isolated process, and the isolated process loads a second management application. Then, the first management application establishes a connection to the second management application according to a binder mechanism, to be specific, the first management application obtains a binder proxy of the second management application, and the second management application obtains a binder proxy of the first management application. Then, the first management application loads the untrusted application to the isolated process by using the second management application. When the client accesses the untrusted application, loading of the untrusted application is dynamic.

A process of loading the untrusted application to the isolated process may include: A custom class loader loads the untrusted application from a storage path of the untrusted application to the isolated process. The custom class loader may use a method of overwriting loadClass or a method of overwriting findClass.

The untrusted application is loaded in the foregoing manner, so that the untrusted application in the isolated process can be managed and installed by the PackageManagerService of the Android system.

It should be noted that the client is unaware of whether the untrusted application runs in a sandbox environment provided by the isolated process.

The life cycle management process of the untrusted applications is as follows:
The untrusted application is not registered in the application management service of the Android system; in this case, the host process cannot directly manage a life cycle of the untrusted application. In view of this, in this embodiment of this application, the application management service creates a service stub. The service stub may be considered as an application. There is a correspondence between a function of a life cycle of the service stub and a function of the life cycle of the untrusted application. In this way, the host process can manage the life cycle of the service stub to manage the life cycle of the untrusted application.

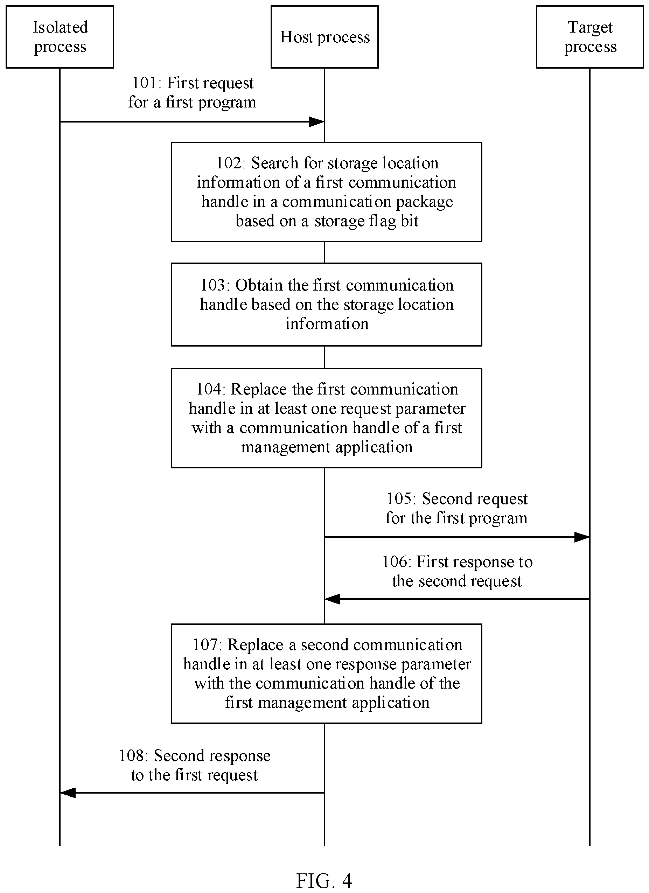

The untrusted application can run after the foregoing two processes are completed. In a running process of the untrusted application, the method provided in this embodiment of this application can be used to manage communication behavior of the untrusted application. For details, refer to FIG. 4. An embodiment of this application provides an embodiment of a method for managing communication of an untrusted application, including the following steps.

Step 101: A host process obtains a first request of an isolated process for a first program. The first request carries at least one request parameter. A first management application runs in the host process. An untrusted application runs in the isolated process.

The first program serves as a request object of the first request. The request object may be an Android system program, or may be a third-party application.

A type of the first request is related to the first program.

Specifically, when the first program is the Android system program, the first request is usually an access request for the Android system program.

When the first program is the third-party application, the first request may be an access request for the third-party application, or may be a request for establishing a binder connection to the first program. When the first request is the request for establishing the binder connection to the first program, the first request is used to request a binder proxy of the first program.

There may also be a plurality of transmission forms of the first request. This is not specifically limited in this embodiment of this application. For example, the first request may be packaged to obtain a communication package including the first request, so that the communication package is transmitted to transmit the first request. The communication package may also be referred to as a cross-process communication package, and may be specifically a parcel object, and the parcel object can be considered as a serialization manner. Correspondingly, the first request obtained by the host process is included in the parcel object.

Both a type and a quantity of a request parameter in the first request are related to the type of the first request. The type and the quantity of the request parameter in the first request are not specifically limited in this embodiment of this application.

It can be learned from the foregoing description that there may be a plurality of types of first programs, and there may also be a plurality of types of first requests. A scenario in which the host process obtains the first request is related to the type of the first program and the type of the first request. Therefore, there may also be a plurality of scenarios in which the host process obtains the first request. The following describes in detail the scenario in which the host process obtains the first request.

Step 102: The host process determines storage location information of a first binder proxy in the communication package based on a storage flag bit. The storage flag bit is used to mark a start location of a target storage area in the communication package, and the target storage area is used to store the first binder proxy.

It can be learned from the related description of the step 101 that the first request may be included in the communication package. In this case, the first binder proxy may be obtained from the first request in steps 102 and 103.

It should be understood that a binder proxy is usually stored in a fixed target storage area of the communication package. A start location of the target storage area is identified by a storage flag bit, and the storage flag bit may be stored at a native layer. Therefore, the host process can determine the storage location information of the first binder proxy in the communication package based on the storage flag bit.

Specifically, from a location identified by the storage flag bit, the target storage area is traversed at an interval of four bytes to search for the storage location information of the first binder proxy in the communication package.

Step 103: The host process obtains the first binder proxy based on the storage location information.

After searching for the storage location information of the first binder proxy in the communication package, the host process may read the first binder proxy from the communication package based on the storage location information.

It should be noted that the step 102 and the step 103 are performed after the step 101 and before step 104. In addition, the first binder proxy can be obtained in the step 102 and the step 103 only when the first request is included in the communication package. Therefore, the step 102 and the step 103 are optional.

Step 104: The host process replaces the first binder proxy in the at least one request parameter with a binder proxy of the first management application.

During actual implementation, the first binder proxy is different from the binder proxy of the first management application. Therefore, a replacement operation may be directly performed. However, a determining step may alternatively be added before the step 104, and replacement is performed when it is determined that the first binder proxy is different from the binder proxy of the first management application.

It can be learned from related descriptions of a binder mechanism that, if the isolated process obtains a binder proxy of a program other than the first management application, the isolated process may directly communicate with another process by using the binder proxy of the another program. Similarly, if a target process of the first program obtains a binder proxy of the untrusted application, the target process may also directly communicate with the isolated process by using the binder proxy of the untrusted application.

Therefore, in this embodiment of this application, the host process replaces the first binder proxy in the first request. Specifically, the host process replaces the first binder proxy with the binder proxy of the first management application, so that the target process of the first program can obtain only the binder proxy of the first management application.

When the first request is included in the communication package, a process in which the host process replaces the first binder proxy with the binder proxy of the first management application may include: replacing, with the binder proxy of the first management application, the first binder proxy in a storage location indicated by the storage location information in the step 103. Because the communication package may alternatively be a parcel object, as shown in FIG. 3, the process may also be referred to as parcel object semantic replacement.

It should be noted that the first binder proxy may be the binder proxy of the untrusted application, or may be a binder proxy of a program other than the binder proxy of the untrusted application and the binder proxy of the first management application. This is not specifically limited in this embodiment of this application.

Step 105: The host process sends a second request for the first program to the target process. The second request carries the at least one request parameter including the binder proxy of the first management application, and the first program runs in the target process.

It may be understood that a function of the host process is to act as a proxy of the isolated process to access the target process. Therefore, except for the binder proxy, a parameter in the second request is the same as a parameter in the first request.

In this embodiment of this application, the host process obtains the first request, replaces, with the binder proxy of the first management application in the host process, a binder proxy that is of the untrusted application and that is included in the request parameter carried in the first request, and then sends, to the target process, the second request that carries the binder proxy of the first management application. In this way, a binder proxy obtained by the target process is the binder proxy of the first management application rather than the binder proxy of the untrusted application. Therefore, the target process can communicate with the host process only by using the binder proxy of the first management application, but cannot communicate with the isolated process by using the binder proxy of the untrusted application. This avoids a case in which the host process cannot play a management role because the target process directly communicates with the isolated process, and further reduces risks such as privacy data leakage and abnormal running of an operating system caused by running of the untrusted application.

Step 106: The host process receives a first response of the target process to the second request. The first response carries at least one response parameter.

It may be understood that, after the step 105 is performed, the target process may send, to the host process, the first response corresponding to the second request. Correspondingly, the host process receives the response.

It can be learned from related descriptions of the step 101 that there may be a plurality of types of first requests, and a type of the first response corresponds to the type of the first request. Therefore, there may also be a plurality of types of first responses. For details, refer to related descriptions of the first request for understanding.

The response parameter is related to the request parameter in the first request, and is similar to the request parameter. A type and a quantity of response parameters are not specifically limited in this embodiment of this application.

Step 107: The host process replaces a second binder proxy in the at least one response parameter with the binder proxy of the first management application.

It can be learned from related descriptions of the step 104 that the request parameter in the first request may include the first binder proxy different from the binder proxy of the first management application. Similarly, the response parameter may also include the second binder proxy different from the binder proxy of the first management application. When the response parameter includes the second binder proxy different from the binder proxy of the first management application, the host process replaces the second binder proxy with the binder proxy of the first management application.

The second binder proxy may be the binder proxy of the first program, or may be a binder proxy of a program other than the binder proxy of the first program and the binder proxy of the host process. This is not specifically limited in this embodiment of this application.

For example, the first program is a program C, and the second binder proxy may be a binder proxy of the program C, or may be a binder proxy of a program D. In other words, the response parameter may indicate the isolated process to access a process of the program D by using the binder proxy of the program D.

Step 108: The host process sends a second response to the first request to the isolated process. The second response carries at least one response parameter including the binder proxy of the first management application.

A relationship between the second response and the first response is similar to a relationship between the second request and the first request. For details, refer to related descriptions of the second request and the first request for understanding.

It should be noted that, for a type of second request, the target process may not send the first response to the host process, and correspondingly, the host process does not send the second response to the isolated process. For example, if the first request is used to request the first program to play audio, and similarly, the second request is also used to request the first program to play audio, after receiving the second request, the target process performs an audio playing operation, and does not send the first response to the host process.

Therefore, the step 106 to the step 108 are optional, and are applicable to a scenario in which the target process sends the second response to the host process.

In this embodiment of this application, the host process obtains the second response from the target process, replaces, with the binder proxy of the first management application, the second binder proxy in the response parameter carried in the second response, and then sends, to the isolated process, the binder proxy that carries the first management application. In this way, the isolated process can receive only the binder proxy of the first management application, but does not receive the second binder proxy different from the binder proxy of the first management application. This avoids a case in which the host process cannot play a management role because the isolated process directly communicates with a process other than the host process by using the second binder proxy, and further reduces risks such as privacy data leakage and abnormal running of an operating system caused by running of the untrusted application.

It can be learned from the foregoing description that there may be a plurality of scenarios in which the host process obtains the first request. The following describes three scenarios in which the host process obtains the first request.

In a first scenario in which the host process obtains the first request: The isolated process sends the first request, to request to establish a binder connection to the target process.

Correspondingly, the first program is the third-party application, the first request is used to request the binder proxy of the first program, the second request is used to request the binder proxy of the first program, and the first binder proxy is the binder proxy of the untrusted application.

It should be understood that, in the Android system, an application management service is used for inter-process management. Therefore, when the isolated process needs to communicate with another process, the isolated process needs to communicate with the another process by using the application management service. To be specific, when the isolated process sends the first request to the target process, the isolated process needs to first send the first request to the application management service, and then the application management service forwards the first request to the target process of the first program.

However, in this embodiment of this application, to enable the host process to manage communication of the isolated process, before the step 101, the method may further include the following step.

The host process replaces, with the binder proxy of the first management application, a binder proxy that is of the application management service and that is in an address space corresponding to the isolated process, so that the isolated process sends the first request to the host process by using the binder proxy of the first management application.

In this embodiment of this application, because the host process replaces, with the binder proxy of the first management application, the binder proxy that is of the application management service and that is in the address space corresponding to the isolated process, the isolated process uses the binder proxy of the first management application as the binder proxy of the application management service. In this way, when the isolated process sends the first request to the target process of the first program, the isolated process sends the first request to the host process by using the binder proxy of the first management application. Correspondingly, the step 101 may specifically include: The host process receives the first request of the isolated process by using the binder proxy of the first management application.

It should be understood that the first request is used to request to establish the binder connection to the target process, so that the request parameter in the first request carries the binder proxy of the untrusted application, and the target process obtains the binder proxy of the untrusted application. The second response also carries the binder proxy of the first program, so that the isolated process obtains the binder proxy of the first program, to implement the binder connection between the isolated process and the target process.

However, in this embodiment of this application, the second request sent by the host process to the target process carries the binder proxy of the host process, and the second response sent by the host process to the isolated process also carries the binder proxy of the host process. Therefore, a binder connection between the isolated process and the host process and a binder connection between the host process and the target process are actually established. Thereafter, communication between the target process and the isolated process depends on the host process.

However, the host process may have a plurality of binder proxies, and the host process may further establish a binder connection to a process other than the target process and the isolated process. Therefore, after the target process sends an access request for the untrusted application to the host process by using the binder proxy of the host process, the host process needs to first determine the binder proxy of the untrusted application by using the binder proxy used by the target process, and then the access request can be forwarded to the isolated process by using the binder proxy of the untrusted application.

Therefore, after the step 101, the method may further include: The host process associates the binder proxy of the untrusted application with the binder proxy of the first management application.

In this way, the host process can determine, based on an association relationship between the binder proxy of the untrusted application and the binder proxy of the first management application, the binder proxy of the untrusted application that needs to be accessed by the access request.

Similarly, after the isolated process sends the access request for the first program to the host process by using the binder proxy of the host process, the host process needs to first determine the binder proxy of the first program by using the binder proxy used by the target process, and then the access request can be forwarded to the target process by using the binder proxy of the first program.

Therefore, after the step 106, the method further includes:
The host process associates the binder proxy of the first program with the binder proxy of the first management application.

In this way, the host process can determine, based on an association relationship between the binder proxy of the first program and the binder proxy of the first management application, the binder proxy of the first program that needs to be accessed by the access request.

The following describes the foregoing process by using a specific example.

For example, the host process has a binder proxy 1 and a binder proxy 2. In a process of establishing a binder connection, the host process replaces both the binder proxy of the untrusted application and the binder proxy of the first program with the binder proxy 1, to be specific, the second request carries the binder proxy 1, and the second response also carries the binder proxy 1. Therefore, the host process separately establishes a binder connection to the target process and the isolated process by using the binder proxy 1. In addition, the host process further establishes a binder connection to another third-party application by using the binder proxy 2.

When the isolated process sends an access request for the first program to the host process by using the binder proxy 1, the host process can determine, based on an association relationship between the binder proxy 1 and the binder proxy of the first program, to forward the access request by using the binder proxy of the first program, instead of forwarding the access request by using the binder proxy of the another third-party application.

Similarly, when the target process sends an access request for the untrusted application to the host process by using the binder proxy 1, the host process can determine, based on an association relationship between the binder proxy 1 and the binder proxy of the untrusted application, to forward the access request by using the binder proxy of the untrusted application, instead of forwarding the access request by using the binder proxy of the another third-party application.

In the first scenario, as shown in FIG. 3, the first request that should be sent to the application management service is transferred to the host process through request transfer, and then the host process completes IPC transfer. The IPC transfer may be understood as that the host process sends the second request to the third-party application.

In this embodiment of this application, the host process replaces, with the binder proxy of the first management application, the binder proxy that is of the application management service and that is in the address space corresponding to the isolated process. Therefore, the host process receives the first request that is from the isolated process and that is used to establish the binder connection. Then, the host process sends, to the target process, the second request used to establish the binder connection. Finally, the host process establishes the binder connection between the isolated process and the host process, and also establishes the binder connection between the host process and the target process. In this way, the host process manages the process of establishing the binder connection to the isolated process or the target process.

In a second scenario in which the host process obtains the first request: The isolated process sends the first request, to request to access the third-party application.

Correspondingly, the first program is the third-party application, the first request is used to access the first program, the second request is used to access the first program, and the binder proxy that is of the first program and that is stored in the address space of the isolated process is the binder proxy of the first management application.

In the second scenario, after the host process establishes a binder connection to the isolated process, and the host process establishes a binder connection to the target process, the isolated process sends the first request for accessing the first program.

Therefore, in the second scenario, the isolated process obtains the binder proxy of the first management application. In other words, the address space of the isolated process stores the binder proxy of the first management application, and the isolated process uses the binder proxy of the first management application as the binder proxy of the first program.

Based on this, when the isolated process needs to send the first request to the first program according to the binder mechanism, the isolated process sends the first request by using the binder proxy of the first management application.

Correspondingly, that the host process obtains the first request of the isolated process for the first program may include:
The host process receives the first request of the isolated process for the first program by using the binder proxy of the first management application.

In the second scenario, the target process obtains the binder proxy of the first management application. In addition, it can be learned from related descriptions of the first scenario that the host process associates the binder proxy of the first program with the binder proxy of the first management application.

Therefore, in an implementation, an address space of the host process stores the binder proxy of the first program, and the binder proxy of the first program is associated with the binder proxy of the first management application.

Correspondingly, that the host process sends the second request for the first program to the target process includes:
The host process sends the second request to the target process by using the binder proxy that is of the first program and that is associated with the binder proxy of the first management application.

It may be understood that the host process determines, based on an association relationship between the binder proxy of the first program and the binder proxy of the first management application, the binder proxy that is of the first program and that is associated with the binder proxy of the first management application, and then sends the second request by using the binder proxy that is of the first program and that is associated with the binder proxy of the first management application.

In the second scenario, as shown in FIG. 3, the first request that should be sent to the application management service is transferred to the host process through request transfer, and then the host process completes IPC transfer. The IPC transfer may be understood as that the host process sends the second request to the third-party application.

In this embodiment of this application, because the binder proxy that is of the first program and that is stored in the address space of the isolated process is the binder proxy of the first management application, the isolated process sends, by using the binder proxy of the first management application, a request for accessing the first program. After receiving the first request, the host process acts as a proxy of the isolated process to access the first program in the target process, so that the host process manages a process in which the untrusted application accesses the third-party application.

In a third scenario in which the host process obtains the first request: The isolated process sends the first request, to request to access the Android system program.

Correspondingly, the first program is a system program. The system program is an Android system program, and may specifically include a system program such as a clipboard program or a mobile hotspot Wi-Fi. The first request is used to access the first program, and the second request is used to access the first program.

Different from the first scenario and the second scenario, in the third scenario, the first program is the system program, that is, the isolated process sends the first request for accessing the system program.

It can be learned from the foregoing description that, in the Android system, a service manager is used to manage all Android system programs, and maintain binder communication between the Android system program and the third-party application. Each process may have a respective service manager. Specifically, the service manager stores a binder proxy of the Android system program, and both the third-party application and the untrusted application can query the binder proxy of each Android system program from the service manager

The untrusted application is used as an example. After querying the binder proxy of the system program from the service manager, the untrusted application can directly communicate with the system program by using the binder proxy of the system program.

However, in this embodiment of this application, to enable the host process to manage communication of the isolated process, before the step 101, the method may further include the following step.

The host process adds, to a service manager in an address space corresponding to the isolated process, an identifier of the first program and the binder proxy that is of the first management application and that is used to replace the binder proxy of the first program, so that the isolated process sends the first request to the host process by using the binder proxy of the first management application. The at least one request parameter further includes the identifier of the first program.

It may be understood that, because the isolated process is a special process with "no permission", to prevent the untrusted application from obtaining the binder proxy of the system program from the service manager in the address space corresponding to the isolated process, the service manager in the address space corresponding to the isolated process usually does not store a binder proxy of any system program. However, in this embodiment of this application, the host process adds the binder proxy of the first management application and the identifier of the first program to the service manager in the address space corresponding to the isolated process, so that the isolated process uses the binder proxy of the first management application as the binder proxy of the first program.

The binder proxy of the first management application and the identifier of the first program may be considered as a binder proxy of a packaged first management application, that is, the binder proxy of the first program is replaced with the binder proxy of the packaged first management application.

Specifically, the host process may add binder proxies of a plurality of packaged first management applications to the service manager, to replace binder proxies of all Android system programs, so as to replace the binder proxies of the first program with the binder proxies of the packaged first management applications. It should be noted that, because identifiers of all Android system programs are different, identifiers of Android system programs are different in binder proxies of packaged first management applications corresponding to different Android system programs

Because the first program is an Android system program, the host process usually adds the binder proxy of the first management application and the identifier of the first program in a process of starting the isolated process (which may be understood as initialization of the isolated process).

Based on this, when the isolated process needs to access the first program, the isolated process queries the binder proxy of the first program from the service manager in the address space corresponding to the isolated process, to obtain the binder proxy of the first management application and the identifier of the first program. The first program is the system program.

The isolated process sends the first request to the host process by using the binder proxy of the first management application. The at least one request parameter further includes the identifier of the first program.

Correspondingly, the step 101 includes: The host process receives the first request of the isolated process for the first program by using the binder proxy of the host process. The request parameter in the first request includes the identifier of the first program.

It may be understood that, after obtaining the identifier of the first program, the host process can query the binder proxy of the first program from the service manager, and then send the second request by using the binder proxy of the first program.

In an implementation, after the step 101 and before the step 102, the method further includes:
The host process queries, from a service manager in an address space corresponding to the host process, the binder proxy that is of the first program and that corresponds to the identifier of the first program.

Correspondingly, that the host process sends the second request to the target process includes:
The host process sends the second request to the target process by using the binder proxy of the first program.

In the third scenario, as shown in FIG. 3, the first request that should be sent to the target process is transferred to the host process through request transfer, and then the host process completes IPC transfer. The IPC transfer may be understood as that the host process sends the second request to the Android system program.

In this embodiment of this application, the host process adds, to the service manager in the address space corresponding to the isolated process, the identifier of the first program and the binder proxy that is of the first management application and that is used to replace the binder proxy of the first program, so that the isolated process sends the first request to the host process by using the binder proxy of the first management application. In this way, the host process can act as a proxy of the isolated process to access the first program in the target process, to manage accessing of the untrusted application to the system program. When the first program is the system program, a manner in which the host process acts as the proxy of the isolated process to access the first program may also be referred to as a stub proxy.

In the foregoing embodiments, the host process manages a process in which the isolated process communicates with the first process according to the binder mechanism. It can be learned from the foregoing description that the isolated process may further communicate with the first process by directly accessing an API. Therefore, the following describes how the host process manages a process in which the isolated process communicates with the first process by accessing the API.

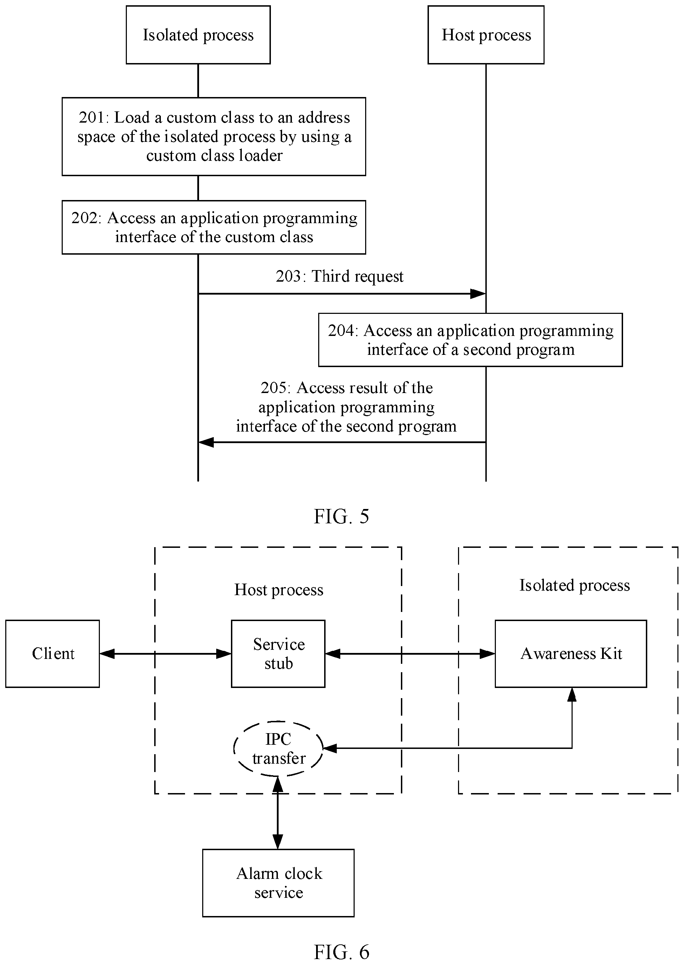

Based on the foregoing embodiments, an embodiment of this application further provides another embodiment of a method for managing communication of an untrusted application. As shown in FIG. 5, this embodiment includes the following steps.

Step 201: An isolated process loads a custom class to an address space of the isolated process by using a custom class loader. An identifier of the custom class is the same as an identifier of a second program, and an identifier of an API of the custom class is the same as an identifier of an API of the second program. The API of the custom class is used to enable the isolated process to send a third request to a host process by using a binder proxy of a first management application. The third request carries the identifier of the second program and the identifier of the API of the second program.

The custom class may be considered as a class object. In the Android system, any functional component such as an application management service or a service manager is also a class object.

Because the identifier of the custom class is the same as the identifier of the second program, when the isolated process accesses the second program, the isolated process accesses the custom class. In addition, because the identifier of the API of the custom class is the same as the identifier of the API of the second program, when the isolated process accesses the API of the second program, the isolated process accesses the API of the custom class.

Because the custom class is customized by a user based on a requirement, the user can set the API of the custom class, so that the isolated process sends the third request to the host process by using the binder proxy of the first management application.

Step 202: When the isolated process accesses the API of the second program based on the identifier of the second program and the identifier of the API of the second program, the isolated process accesses the API of the custom class.

It can be learned from the related description of the step 201 that the isolated process accesses the API of the custom class when the isolated process accesses the API of the second program.

Step 203: The isolated process sends the third request to the host process by using the binder proxy of the first management application.

It can be learned from the related description of the step 201 that, because the API of the custom class enables the isolated process to send the third request to the host process by using the binder proxy of the first management application, the isolated process accesses the API of the custom class, and the isolated process is prompted to send the third request by using the binder proxy of the first management application.

Correspondingly, the host process receives the third request of the isolated process by using the binder proxy of the first management application. The third request carries the identifier of the second program and the identifier of the API of the second program.

Step 204: The host process accesses the API of the second program based on the identifier of the second program and the identifier of the API of the second program that are in the third request.

It may be understood that, after receiving the third request, the host process accesses the API of the second program based on the identifier of the second program and the identifier of the API of the second program, that is, the host process acts as a proxy of the isolated process to access the API of the second program.

Step 205: The host process sends an access result of the API of the second program to the isolated process by using a binder proxy of the untrusted application.

After the host process obtains the access result of the API of the second program, the host process can send the access result of the API of the second program to the isolated process according to a binder mechanism.

In this embodiment of this application, a system program represented by the second program is different from the system program represented by the first program in the third scenario in the foregoing embodiment. The second program is mainly a system program whose binder proxy is not stored in the service manager, and the system program represented by the first program in the third scenario is a system program whose binder proxy is stored in the service manager. Specifically, a binder proxy of the system program represented by the first program in the third scenario is stored in the service manager, and the system program represented by the second program may also have a binder proxy, but the binder proxy is not stored in the service manager. Therefore, the binder proxy of the system program represented by the second program cannot be queried by using the service manager, and the second program can be accessed only through the API of the second program.

The system program represented by the second program may be an alarm clock service AlarmManager, an audio manager AudioManager, or the like.

To better understand the method provided in this embodiment of this application, the following further provides two specific application examples.

The first application example is as follows:
As shown in FIG. 6, a client needs to use an Awareness Kit (Awareness Kit) to register a time fence DuringTimePeriod. When a device is in a preset time period, a status of the time fence is true (True).

Specifically, the client starts the host process, the host process starts the isolated process, the isolated process loads the Awareness Kit (that is, the untrusted application), and the host process establishes a service stub bound to the Awareness Kit.

When performing logic processing of the time fence, the Awareness Kit needs to access the AlarmManager in the system program. In this case, because a custom class whose identifier is the same as an identifier of the AlarmManager is loaded to the isolated process, when accessing an API of the AlarmManager, the isolated process sends, to the host process, a request for accessing the API of the AlarmManager. For details, refer to related descriptions of the embodiment shown in FIG. 5. After receiving the request for accessing the API of the AlarmManager, the host process accesses the API of the AlarmManager and sends an access result to the isolated process, thereby completing IPC transfer.

Finally, the Awareness Kit in the isolated process returns a response result of the time fence to the client by using the host process.

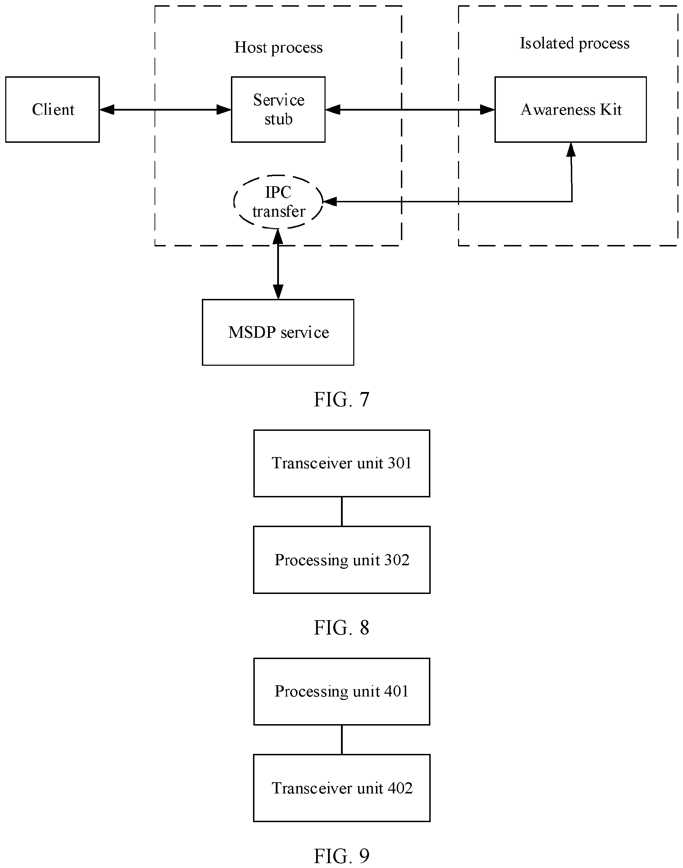

The second application example is as follows:
As shown in FIG. 7, a client needs to use an activity identification snapshot GetBehaviorStatus function of an Awareness Kit (Awareness Kit). The function is used to query information about a current motion status of a device, for example, walking or running.

Specifically, the client starts the host process, the host process starts the isolated process, the isolated process loads the Awareness Kit (that is, the untrusted application), and the host process establishes a service stub bound to the Awareness Kit.

When performing logical processing of the activity identification snapshot, the Awareness Kit needs to access an MSDP service. In this case, the isolated process first establishes a binder connection to a process of the MSDP service by using the host process. For a process of establishing the binder connection, refer to related descriptions of the first scenario in the foregoing embodiment. After the binder connection is established, the isolated process may access the MSDP service by using the host process, and send an access result to the isolated process, thereby completing IPC transfer.

Finally, the Awareness Kit in the isolated process returns, to the client by using the host process, motion status information that is of the device and that is queried by the activity identification snapshot.

In this embodiment of this application, a root permission of the Android system does not need to be obtained, and an application framework layer of the Android system and source code of the untrusted application do not need to be modified, so that a permission-controlled running environment is constructed for the untrusted application, and communication behavior of the untrusted application is effectively managed. In addition, after a large quantity of tests, a response time consumed when the untrusted application runs in the isolated process is slightly different from a response time consumed when the untrusted application does not run in the isolated process. Therefore, in this embodiment of this application, it can be ensured that the untrusted application runs with high performance efficiency.

As shown in FIG. 8, an embodiment of this application further provides an embodiment of an apparatus for managing communication of an untrusted application, including:
a transceiver unit 301, configured to obtain a first request of a second process for a first program, where the first request carries at least one request parameter, a first management application runs in a first process, and the untrusted application runs in the second process; and
a processing unit 302, configured to replace a first communication handle in the at least one request parameter with a communication handle of the first management application.

The transceiver unit 301 is configured to send a second request to a target process, where the second request carries the at least one request parameter including the communication handle of the first management application, and the first program runs in the target process.

In an implementation, the first request is included in a communication package. The processing unit 302 is further configured to: determine storage location information of the first communication handle in the communication package based on a storage flag bit, where the storage flag bit is used to mark a start location of a target storage area in the communication package, and the target storage area is used to store the first communication handle; and obtain the first communication handle based on the storage location information.

In an implementation, the first program is a third-party application, the first request is used to request a communication handle of the first program, the second request is used to request the communication handle of the first program, and the first communication handle is a communication handle of the untrusted application.

Correspondingly, the processing unit 302 is further configured to replace, with the communication handle of the first management application, a communication handle that is of an application management service and that is in an address space corresponding to the second process, so that the second process sends the first request to the first process based on the communication handle of the first management application.

In an implementation, the processing unit 302 is further configured to associate the communication handle of the untrusted application with the communication handle of the first management application.

In an implementation, the first program is a third-party application, the first request is used to access the first program, and the second request is used to access the first program. The communication handle that is of the first program and that is stored in an address space of the second process is the communication handle of the first management application.

Correspondingly, the transceiver unit 301 is further configured to receive the first request of the second process for the first program based on the communication handle of the first management application.

In an implementation, an address space of the first process stores the communication handle of the first program, and the communication handle of the first program is associated with the communication handle of the first management application.

Correspondingly, the transceiver unit 301 is further configured to send the second request to the target process based on the communication handle that is of the first program and that is associated with the communication handle of the first management application.

In an implementation, the first program is a system program, the first request is used to access the first program, and the second request is used to access the first program.

The processing unit 302 is further configured to add, to a service manager in an address space corresponding to the second process, an identifier of the first program and the communication handle that is of the first management application and that is used to replace a communication handle of the first program, so that the second process sends the first request to the first process based on the communication handle of the first management application. The at least one request parameter further includes the identifier of the first program.

In an implementation, the processing unit 302 is further configured to query, from a service manager in an address space corresponding to the first process, the communication handle that is of the first program and that corresponds to the identifier of the first program.

The transceiver unit 301 is further configured to send the second request to the target process based on the communication handle of the first program.

In an implementation, the transceiver unit 301 is further configured to receive a first response of the target process to the second request. The first response carries at least one response parameter.

The processing unit 302 is further configured to replace a second communication handle in the at least one response parameter with the communication handle of the first management application.

The transceiver unit 301 is further configured to send a second response to the first request to the second process. The second response carries the at least one response parameter including the communication handle of the first management application.

In an implementation, the first program is the third-party application, the first request is used to request the communication handle of the first program, the second request is used to request the communication handle of the first program, and the second communication handle is the communication handle of the first program.

Correspondingly, the processing unit 302 is further configured to associate, by using the first process, the communication handle of the first program with the communication handle of the first management application.

In an implementation, the transceiver unit 301 is further configured to: receive, by using the first process, a third request of the second process based on the communication handle of the first management application, where the third request carries an identifier of the second program and an identifier of an application programming interface API of the second program; and access the API of the second program based on the identifier of the second program and the identifier of the API of the second program that are in the third request.

In an implementation, the transceiver unit 301 is further configured to send an access result of the API of the second program to the second process based on the communication handle of the untrusted application.

For specific implementations, related descriptions, and technical effect of the foregoing units, refer to descriptions in the first aspect of embodiments of this application.

As shown in FIG. 9, an embodiment of this application further provides an embodiment of an apparatus for managing communication of an untrusted application, including:
a processing unit 401, configured to query a communication handle of a first program from a service manager in an address space corresponding to a second process, to obtain a communication handle of a first management application and an identifier of the first program, where the first program is a system program; and
a transceiver unit 402, configured to send a first request to a first process based on the communication handle of the first management application, where at least one request parameter includes the identifier of the first program.

In an implementation, the processing unit 401 is further configured to load a custom class to the address space of the second process by using a custom class loader, where an identifier of the custom class is the same as an identifier of a second program, an identifier of an application programming interface API of the custom class is the same as an identifier of an API of the second program, the API of the custom class is used to enable the second process to send a third request to the first process based on the communication handle of the first management application, and the third request carries the identifier of the second program and the identifier of the API of the second program. When the second process accesses the API of the second program based on the identifier of the second program and the identifier of the API of the second program, the second process accesses the API of the custom class.

The transceiver unit 402 is further configured to send, by using the second process, the third request to the first process based on the communication handle of the first management application.

For specific implementations, related descriptions, and technical effect of the foregoing units, refer to descriptions in the second aspect of embodiments of this application.

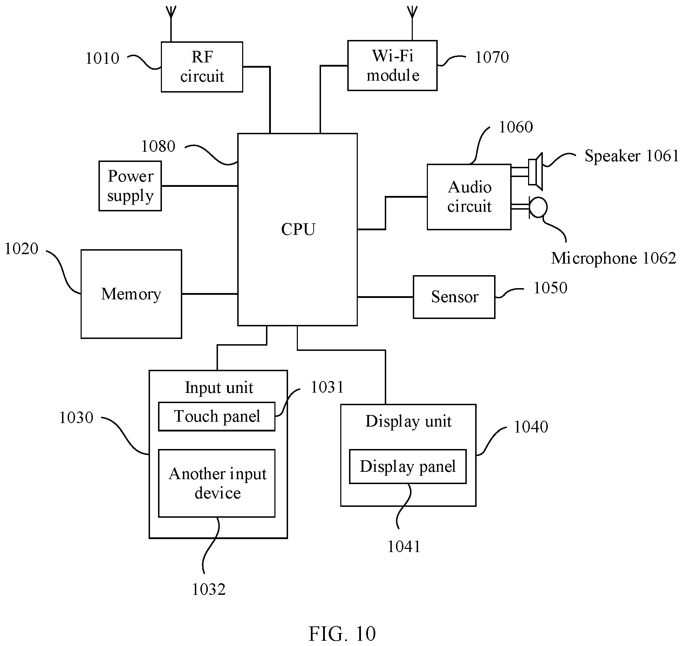

As shown in FIG. 10, an embodiment of this application further provides another terminal device. For ease of description, only a part related to this embodiment of this application is described. For specific technical details that are not disclosed, refer to the method part in embodiments of this application. The terminal may be any terminal device such as a mobile phone, a tablet computer, a personal digital assistant (English full name: Personal Digital Assistant, English acronym: PDA), a point of sales (English full name: Point of Sales, English acronym: POS), or a vehicle-mounted computer. For example, the terminal is a mobile phone.

FIG. 10 is a block diagram of a partial structure of a mobile phone related to a terminal according to this embodiment of this application. Refer to FIG. 10, the mobile phone includes components such as a radio frequency (English full name: Radio Frequency, English acronym: RF) circuit 1010, a memory 1020, an input unit 1030, a display unit 1040, a sensor 1050, an audio circuit 1060, a wireless fidelity (English full name: wireless fidelity, English acronym: Wi-Fi) module 1070, a central processing unit CPU 1080, and a power supply. A person skilled in the art may understand that a structure of the mobile phone shown in FIG. 10 constitutes no limitation on the mobile phone. The mobile phone may include more or fewer components than those shown in the figure, may combine some components, or may have different component arrangements.

The following describes the components of the mobile phone in detail with reference to FIG. 10.

The RF circuit 1010 may be configured to receive and send signals during an information receiving and sending process or a call process. Particularly, the RF circuit 1010 receives downlink information from a base station, then delivers the downlink information to the CPU 1080 for processing, and sends designed uplink data to the base station. Generally, the RF circuit 1010 includes, but not limited to, an antenna, at least one amplifier, a transceiver, a coupler, a low noise amplifier (English full name: Low Noise Amplifier, English acronym: LNA), a duplexer, and the like. In addition, the RF circuit 1010 may further communicate with a network and another device through wireless communication. Any communication standard or protocol may be used for the foregoing wireless communication, including but not limited to a global system for mobile communication (English full name: Global System for Mobile communication, English acronym: GSM), a general packet radio service (English full name: General Packet Radio Service, GPRS), code division multiple access (English full name: Code Division Multiple Access, English acronym: CDMA), wideband code division multiple access (English full name: Wideband Code Division Multiple Access, English acronym: WCDMA), long term evolution (English full name: Long Term Evolution, English acronym: LTE), an email, a short message service (English full name: Short Messaging Service, SMS), and the like.

The memory 1020 may be configured to store a software program and module. The CPU 1080 runs the software program and module stored in the memory 1020, to implement various functional applications and data processing of the mobile phone. The memory 1020 may mainly include a program storage area and a data storage area. The program storage area may store an operating system, an application required by at least one function (such as a sound playing function or an image display function), and the like. The data storage area may store data (such as audio data and an address book) created based on use of the mobile phone, and the like. In addition, the memory 1020 may include a high-speed random access memory, or may include a non-volatile memory such as at least one disk storage device, a flash storage device, or another volatile solid-state storage device.

The input unit 1030 may be configured to receive input digit or character information, and generate a keyboard signal input related to a user setting and function control of the mobile phone. Specifically, the input unit 1030 may include a touch panel 1031 and another input device 1032. The touch panel 1031, also referred to as a touchscreen, may collect a touch operation of a user on or near the touch panel 1031 (such as an operation of a user on the touch panel 1031 or near the touch panel 1031 by using any suitable object or accessory such as a finger or a stylus), and drive a corresponding connection apparatus based on a preset program. Optionally, the touch panel 1031 may include two parts: a touch detection apparatus and a touch controller. The touch detection apparatus detects a touch position of the user, detects a signal generated by a touch operation, and transmits the signal to the touch controller. The touch controller receives touch information from the touch detection apparatus, converts the information into contact coordinates, sends the coordinates to the CPU 1080, and can receive and execute a command sent by the CPU 1080. In addition, the touch panel 1031 may be implemented in a plurality of types, such as a resistive type, a capacitive type, an infrared ray type, and a surface acoustic wave type. In addition to the touch panel 1031, the input unit 1030 may further include the another input device 1032. Specifically, the another input device 1032 may include, but not limited to, one or more of a physical keyboard, a functional key (such as a volume control key or a switch key), a trackball, a mouse, and a joystick.

The display unit 1040 may be configured to display information input by the user or information provided for the user, and various menus of the mobile phone. The display unit 1040 may include a display panel 1041. Optionally, the display panel 1041 may be configured in a form such as a liquid crystal display (English full name: Liquid Crystal Display, English acronym: LCD) or an organic light-emitting diode (English full name: Organic Light-Emitting Diode, English acronym: OLED). Further, the touch panel 1031 may cover the display panel 1041. When detecting a touch operation on or near the touch panel 1031, the touch panel 1031 transmits the touch operation to the CPU 1080 to determine a type of a touch event, and then the CPU 1080 provides corresponding visual output on the display panel 1041 based on the type of the touch event. In FIG. 10, the touch panel 1031 and the display panel 1041 are used as two independent components to implement input and input functions of the mobile phone. However, in some embodiments, the touch panel 1031 and the display panel 1041 may be integrated to implement the input and output functions of the mobile phone.

The mobile phone may further include at least one sensor 1050 such as an optical sensor, a motion sensor, and another sensor. Specifically, the light sensor may include an ambient light sensor and a proximity sensor. The ambient light sensor may adjust luminance of the display panel 1041 based on brightness of ambient light. The proximity sensor may turn off the display panel 1041 and/or backlight when the mobile phone approaches to an ear. As a type of motion sensor, an accelerometer sensor may detect a value of acceleration in each direction (usually on three axes), may detect a value and a direction of gravity in a stationary state, and may be used in an application for identifying a mobile phone posture (such as screen switching between a landscape mode and a portrait mode, a related game, or magnetometer posture calibration), a function related to vibration identification (such as a pedometer or a knock), or the like. Another sensor such as a gyroscope, a barometer, a hygrometer, a thermometer or an infrared sensor may be further configured in the mobile phone. Details are not described herein.

The audio circuit 1060, a speaker 1061, and a microphone 1062 may provide audio interfaces between the user and the mobile phone. The audio circuit 1060 may convert received audio data into an electric signal and transmit the electric signal to the speaker 1061. The speaker 1061 converts the electric signal into a sound signal for output. On the other hand, the microphone 1062 converts a collected sound signal into an electric signal. The audio circuit 1060 receives the electric signal, converts the electric signal into audio data, and outputs the audio data to the CPU 1080 for processing, and then the audio data is sent to, for example, another mobile phone by using the RF circuit 1010, or the audio data is output to the memory 1020 for further processing.

Wi-Fi belongs to a short-distance wireless transmission technology. The mobile phone may help, by using a Wi-Fi module 1070, the user receive and send an email, browse a web page, access streaming media, and the like, which provides wireless broadband Internet access for the user. Although FIG. 10 shows the Wi-Fi module 1070, it may be understood that the Wi-Fi module 1070 is not a mandatory component of the mobile phone, and may be completely omitted based on a requirement without changing the essence of the present invention.

The CPU 1080, being a control center of the mobile phone, connects each part of the entire mobile phone by using various interfaces and lines, performs various functions of the mobile phone and processes data through running or executing software programs and/or modules stored in the memory 1020 and invoking data stored in the memory 1020, to perform entire monitoring on the mobile phone. Optionally, the CPU 1080 may include one or more processing units. Preferably, an application processor and a modem processor may be integrated into the CPU 1080, where the application processor mainly processes an operating system, a user interface, an application, and the like; and the modem processor mainly processes wireless communication. It may be understood that the foregoing modem processor may not be integrated into the CPU 1080.

The mobile phone further includes a power supply (such as a battery) that supplies power to all the components. Preferably, the power supply may be logically connected to the CPU 1080 by using a power management system, to implement, by using the power management system, functions such as management of charging, discharging, and power consumption.

Although not shown, the mobile phone may further include a camera, a Bluetooth module, and the like. Details are not described herein.

In this embodiment of this application, the CPU 1080 included in the terminal may run the host process and the isolated process in the foregoing embodiments.

An embodiment of this application further provides a chip, including one or more processors. Some or all of the processors are configured to read and execute a computer program stored in a memory, to perform the method in embodiments corresponding to FIG. 4 and FIG. 5.

Optionally, the chip includes the memory, and the memory and the processor are connected to the memory through a circuit or a wire. Further, optionally, the chip further includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface.

In some implementations, some of the one or more processors may implement some steps in the foregoing method by using dedicated hardware. For example, processing related to a neural network model may be implemented by a dedicated neural network processor or graphics processing unit.

The method provided in embodiments of this application may be implemented by one chip, or may be cooperatively implemented by a plurality of chips.

An embodiment of this application further provides a computer storage medium. The computer storage medium is configured to store computer software instructions used by the foregoing computer device, and the computer software instructions include a program designed for execution by the computer device.

The computer device may include the apparatus for managing communication of an untrusted application described in FIG. 8 and FIG. 9.

An embodiment of this application further provides a computer program product. The computer program product includes computer software instructions. The computer software instructions may be loaded by a processor to implement a procedure of the method shown in FIG. 4 or FIG. 5.

It may be clearly understood by a person skilled in the art that, for ease and brevity of description, for a detailed working process of foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. All or some of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A method for managing communication of an untrusted application, comprising:
obtaining, by a first process, a first request of a second process for a first program, wherein the first request carries at least one request parameter, a first management application runs in the first process, and the untrusted application runs in the second process;
replacing, by the first process, a first communication handle in the at least one request parameter with a communication handle of the first management application; and
sending, by the first process, a second request for the first program to a target process, wherein the second request carries the at least one request parameter comprising the communication handle of the first management application, and the first program runs in the target process.

2. The method according to claim 1, wherein the first request is comprised in a communication package; and
after the obtaining, by a first process, a first request of a second process for a first program, and before the replacing, by the first process, a first communication handle in the at least one request parameter with a communication handle of the first management application, the method further comprises:
determining, by the first process, storage location information of the first communication handle in the communication package based on a storage flag bit, wherein the storage flag bit is used to mark a start location of a target storage area in the communication package, and the target storage area is used to store the first communication handle; and
obtaining, by the first process, the first communication handle based on the storage location information.

3. The method according to claim 1 or 2, wherein the first program is a third-party application, the first request is used to request a communication handle of the first program, the second request is used to request the communication handle of the first program, and the first communication handle is a communication handle of the untrusted application; and
before the obtaining, by a first process, a first request of a second process for a first program, the method further comprises:
replacing, by the first process with the communication handle of the first management application, a communication handle that is of an application management service and that in an address space corresponding to the second process, so that the second process sends the first request to the first process based on the communication handle of the first management application.

4. The method according to claim 3, wherein after the obtaining, by a first process, a first request of a second process for a first program, the method further comprises:
associating, by the first process, the communication handle of the untrusted application with the communication handle of the first management application.

5. The method according to claim 1 or 2, wherein the first program is a third-party application, the first request is used to access the first program, and the second request is used to access the first program;
a communication handle that is of the first program and that is stored in an address space of the second process is the communication handle of the first management application; and
the obtaining, by a first process, a first request of a second process for a first program comprises:
receiving, by the first process, the first request of the second process for the first program based on the communication handle of the first management application.

6. The method according to claim 5, wherein an address space of the first process stores the communication handle of the first program, and the communication handle of the first program is associated with the communication handle of the first management application; and
the sending, by the first process, a second request for the first program to a target process comprises:
sending, by the first process, the second request to the target process based on the communication handle that is of the first program and that is associated with the communication handle of the first management application.

7. The method according to claim 1 or 2, wherein the first program is a system program, the first request is used to access the first program, and the second request is used to access the first program; and
before the obtaining, by a first process, a first request of a second process for a first program, the method further comprises:
adding, by the first process to a service manager in an address space corresponding to the second process, an identifier of the first program and the communication handle that is of the first management application and that is used to replace a communication handle of the first program, so that the second process sends the first request to the first process based on the communication handle of the first management application, wherein the at least one request parameter further comprises the identifier of the first program.

8. The method according to claim 7, wherein after the obtaining, by a first process, a first request of a second process for a first program, and before the sending, by the first process, a second request for the first program to a target process, the method further comprises:
querying, by the first process from a service manager in an address space corresponding to the first process, the communication handle that is of the first program and that corresponds to the identifier of the first program; and
the sending, by the first process, a second request to a target process comprises:
sending, by the first process, the second request to the target process based on the communication handle of the first program.

9. The method according to any one of claims 1 to 8, wherein after the sending, by the first process, a second request to a target process, the method further comprises:
receiving, by the first process, a first response of the target process to the second request, wherein the first response carries at least one response parameter;
replacing, by the first process, a second communication handle in the at least one response parameter with the communication handle of the first management application; and
sending, by the first process, a second response to the first request to the second process, wherein the second response carries the at least one response parameter comprising the communication handle of the first management application.

10. The method according to claim 9, wherein the first program is the third-party application, the first request is used to request the communication handle of the first program, the second request is used to request the communication handle of the first program, and the second communication handle is the communication handle of the first program; and
after the receiving, by the first process, a first response of the target process to the second request, the method further comprises:
associating, by the first process, the communication handle of the first program with the communication handle of the first management application.

11. The method according to any one of claims 1 to 10, wherein the method further comprises:
receiving, by the first process, a third request of the second process based on the communication handle of the first management application, wherein the third request carries an identifier of the second program and an identifier of an application programming interface of the second program; and
accessing, by the first process, the application programming interface of the second program based on the identifier of the second program and the identifier of the application programming interface of the second program that are in the third request.

12. The method according to claim 11, wherein the method further comprises:
sending, by the first process, an access result of the application programming interface of the second program to the second process based on the communication handle of the untrusted application.

13. A method for managing communication of an untrusted application, comprising:
querying, by a second process, a communication handle of a first program from a service manager in an address space corresponding to the second process, to obtain a communication handle of a first management application and an identifier of the first program, wherein the untrusted application runs in the second process, and the first program is a system program; and
sending, by the second process, a first request to a first process based on the communication handle of the first management application, wherein the first request is used to access the first program, at least one request parameter comprises the identifier of the first program, and the first management application runs in the first process.

14. The method according to claim 13, wherein the method further comprises:
loading, by the second process, a custom class to an address space of the second process by using a custom class loader, wherein an identifier of the custom class is the same as an identifier of a second program, an identifier of an application programming interface of the custom class is the same as an identifier of an application programming interface of the second program, the application programming interface of the custom class is used to enable the second process to send a third request to the first process based on the communication handle of the first management application, and the third request carries the identifier of the second program and the identifier of the application programming interface of the second program;
when the second process accesses the application programming interface of the second program based on the identifier of the second program and the identifier of the application programming interface of the second program, accessing, by the second process, the application programming interface of the custom class; and
sending, by the second process, the third request to the first process based on the communication handle of the first management application.

15. An apparatus for managing communication of an untrusted application, comprising:
a transceiver unit, configured to obtain a first request of a second process for a first program, wherein the first request carries at least one request parameter, a first management application runs in a first process, and the untrusted application runs in the second process; and
a processing unit, configured to replace a first communication handle in the at least one request parameter with a communication handle of the first management application, wherein
the transceiver unit is configured to send a second request to a target process, wherein the second request carries the at least one request parameter comprising the communication handle of the first management application, and the first program runs in the target process.

16. An apparatus for managing communication of an untrusted application, comprising:
a processing unit, configured to query a communication handle of a first program from a service manager in an address space corresponding to a second process, to obtain a communication handle of a first management application and an identifier of the first program, wherein the untrusted application runs in the second process, and the first program is a system program; and
a transceiver unit, configured to send a first request to a first process based on the communication handle of the first management application, wherein at least one request parameter comprises the identifier of the first program, and the first management application runs in the first process.

17. A terminal device, comprising one or more processors and a memory, wherein the memory stores computer-readable instructions; and
the one or more processors read the computer-readable instructions, to enable a computer device to implement the method according to any one of claims 1 to 14.

18. A computer-readable storage medium, comprising computer-readable instructions, wherein when the computer-readable instructions are run on a computer, the computer is enabled to perform the method according to any one of claims 1 to 14.

19. A computer program product, comprising computer-readable instructions, wherein when the computer-readable instructions are run on a computer, the computer is enabled to perform the method according to any one of claims 1 to 14.
